(19) Europäisches Patentamt / European Patent Office / Office européen des brevets

(11) **EP 4 197 743 A1**

(12) **EUROPEAN PATENT APPLICATION**

(43) Date of publication:
**21.06.2023 Bulletin 2023/25**

(21) Application number: **21460044.7**

(22) Date of filing: **15.12.2021**

(51) International Patent Classification (IPC):
**B29C 64/129** (2017.01)   **B29C 64/241** (2017.01)
**B29C 64/245** (2017.01)   **B33Y 10/00** (2015.01)
**B33Y 30/00** (2015.01)   **B29C 64/135** (2017.01)

(52) Cooperative Patent Classification (CPC):
**B33Y 30/00; B29C 64/135; B29C 64/241;
B29C 64/245; B33Y 10/00**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Atmat Spolka Z Ograniczona
Odpowiedzialnoscia
32-590 Libiaz (PL)**

(72) Inventors:
• **Góra, Michal
   30-716 Kraków (PL)**

• **Góra, Mateusz
   32-566 Regulice (PL)**
• **Dylag, Mateusz
   32-590 Libiaz (PL)**

(74) Representative: **Karczmitowicz, Teresa Ewa
Kancelaria Prawa Wlasnosci Przemyslowej
Ul. Wroclawska 33 lok. A4
30-011 Kraków (PL)**

Remarks:
Amended claims in accordance with Rule 137(2)
EPC.

(54) **A BOTTOM-UP 3D PRINTER, A PLATFORM FOR THIS PRINTER, AND A METHOD OF 3D PRINTING**

(57)   A bottom-up 3D printer comprises a resin tub (8) provided with a quartz glass window (10), an optical system (28) comprising a laser (16) and an oscillating and/or rotating mirror (17), a platform (3) supporting on its bottom conical surface (4) the printed object (29), and the actuators (25, 26, 27) controlled by a control system, all mounted on a frame (30) enclosed in a housing. The platform (3) is suspended in a platform head (2) mounted in a suspension mechanism (1). The platform head (2) rotates about vertical axis (R1), while the platform (3) counter-rotates about inclined axis (R2) forming an angle ($\gamma$) with vertical. The axis of the cone of the platform (3) is collinear with its axis of rotation (R2), and a generatrix of the cone makes the same angle ($\gamma$) with the plane perpendicular to the cone axis. Angular velocities ($\omega 1$, $\omega 2$) of, respectively, the platform head (2) and the platform (3) are comprised in a range of 1-30 RPM, preferably 10-15 RPM. The suspension mechanism (1) has the means for radial displacement of the platform head (2) and its vertical axis (R1), relative to the point of intersection (S) of the inclined axis (R2) with the upper surface of the window (10). This point of intersection (S) remains fixed during printing. The angle ($\gamma$) is controllable by rotation of the platform (3) about a horizontal axis (R3) in the platform head (2). The platform (3) has a removable conical cap (5) fixed with the fastening means (6) to a support of the cap (7). An instantaneous position of the laser light spot (19) on the upper surface of the window (10) is controlled by a control system, through rotation or oscillation of the mirror (17) about horizontal axis (R4), and also rotation or oscillation about vertical axis (R5). UV or VIS laser light initiates the photocuring of the resin and build-up of new layer of the printout.

Fig.1

## Description

The present invention relates to a platform used as a basis for an object printed using a bottom-up 3D printer. The invention further relates to the bottom-up 3D printer, and a method of 3D printing with the use of said 3D printer.

Bottom-up 3D printing is a variant of stereolitography (SLA, also abbreviated to SL or STL) which is one of several methods of additive manufacturing, aside to fused deposition modelling (FDM) and digital light projection (DLP) used for rapid prototyping. In most of applications SLA consists in curing a photosensitive material in a liquid or semi-liquid state with a beam of light emitted by a laser or a laser diode. This is possible due to the photopolymerization process, i.e. a photochemically initiated reaction. The monomers are polymerized in the presence of a photoinitiator, which decomposes under the influence of ultraviolet (UV) or visible (VIS) light and forms active centers responsible for initiation of the polymerization reaction. The described technique allows for manufacturing of the objects having various and complex shapes, and diverse mechanical properties which mainly depend on the material used.

An SLA printer comprises three main elements: an optical system, a platform supporting the printed object, and a resin tub, all mounted on a frame or chassis enclosed in a housing. Obviously, the printer has various other subsystems needed for printing like driving modules, resin supply module, thermostat, controllers, power supply unit, etc.

The optical system consists of a laser or light emitting diode (LED) which is a source of a focused beam of light, usually UV or short-wave VIS (e.g. 405 nm), and a set of one or more mirrors that directs the beam through the window toward the object printed on the platform. The mirrors are tiltable and their movement is computer-controlled regarding X-Y (i.e. horizontal) coordinates, speed and resolution, which means that the light spot is precisely positioned on the working field in the pre-set coordinates for a pre-set time, likewise in a scanner or a 2D laser printer.

The platform is a support for the printed object. Usually it is a rigid element having flat horizontal surface where the printing process begins. At least during printing of the first layer this surface must be immersed in the light-cured resin. Due to relatively big mass and inertia of the platform it moves only in Z (i.e. vertical) direction.

The resin tub in turn is a tank open on the top, so that the platform can freely enter inside the tank. Depending on particular technology used, either the platform or the tub is movable within the housing in Z (up-down) direction to enable build-up of the printed object.

The 3D printers usually have three degrees of freedom: two for X-Y positioning of the spot of light, and one for Z movement of the platform or tub. In particular solutions of a 3D printer the platform instead of the light spot may move in X-Y plane.

There are two main variants of SLA: top-down and bottom-up. In the top-down technology the light beam is directed from above the resin tank toward the platform which is immersed in the tub, and the object is printed upwards. During printing the whole printed object is immersed in the resin, because light-initiated curing occurs at the object-resin boundary layer.

Contrary to this, in the bottom-up technology the light beam is directed toward the platform from beneath the tub which has a bottom window made of UV-transparent quartz glass and an anti-adhesive layer (film or foil) that separates the printed object from the glass surface. The platform is immersed in the resin only at the beginning of the printing process, and then it is gradually moved upwards, or the tub is gradually moved downwards. The object is printed downwards. The advantage of this technology is that neither the platform nor the object must be submerged in the liquid substrate. Only the actually printed layer of the object has to be immersed in the resin which is cured when illuminated with a spot of light directed by the optical system. Therefore the total volume of the resin can be reduced to only a bit more than the volume of the printed object. Only a thin layer of constantly replenished resin, sufficient for printing the object, fills the tub.

A disadvantage of this method is in that during printing the object must be continuously separated from the tub's bottom, because the resin is cured just above the surface of the tub bottom, i.e. at the glass/foil window surface. Usually, in an SLA printer, it is done with the use of an idle course, which is needed to detach the printout from the resin tub and to enable sufficient inflow of fresh resin onto the irradiated surface before printing of a new layer.

Detachment of the printed object from the tub bottom is a difficult and time consuming phase of the 3D printing, because the printout has to be separated from the glass window at the whole surface on the just-printed layer. Adhesion forces are strong even if the upper surface of the window is covered with an anti-adhesive film or foil, e.g. a silicone layer. The problem further increases with enlarging area of the printout cross section: the larger is the cross section, the higher force must be applied which may lead to deformation or even destruction of the printout.

In some printers the printed object is elevated together with the elastic foil which is then gradually detached. This solution additionally extends the time of printing. Whatever is the method of detachment, it makes 3D printing ineffective, because it must be repeated every time a new layer has been applied. Significant amount of total printing time is intended for this operation only. From the point of view of the printing process efficiency, this time is wasted.

The proposed invention solves this problem and reduces detachment time virtually to zero, thus maximizing 3D printing efficiency.

Many inventions have been proposed related to the SLA 3D printers.

Chinese patent document CN105856573 (A) describes a top-down and bottom-up variants of high-precision and high-speed continuous 3D printer, and a printing method thereof. The printer comprises an imaging device, a tub filled with photosensitive resin, a printing platform and a servo motor. The imaging device is arranged above or below the resin tub and composed of a laser galvanometer, a galvanometer holder, a field lens, a mirror, a UV light source and a digital micromirror device (DMD) chip. Ultraviolet rays emitted by the light source are projected on the DMD chip. A programmable light beam body is formed through reflection of the DMD chip. It forms a vertical light path similar to laser through deflection and refraction of the reflecting mirror. The vertical light path is refracted to the laser galvanometer which controls scanning of the vertical light path and deflects it accordingly. Then it is refracted through the field lens which produces the light beam perpendicular to a printing plane, and finally it is projected to the structure to be shaped.

The invention presented in Korean patent KR102148822 (B1) relates to a 3D printing apparatus for obtaining a 3D printed output by curing photocurable resin using a bottom UV light source. A plurality of inflow holes is formed on the bottom surface of the molding part, and the pressure applied to the photocurable resin is discharged, thereby minimizing deformation and damage of the elastic film. A printout can be safely separated using a push block, thereby preventing damage to the printout. The tension of the elastic film is additionally formed by allowing the material tray to be seated on the pressing protrusion part of a fixed stage.

Chinese utility model application CN208867574 (U) describes a high-speed 3D printing equipment which comprises a platform supporting a printed object. The platform is connected with a mechanical driving device and can move vertically. It is provided with a light-transmitting resin box filled with a light-cured resin. The light source placed beneath the resin box provides UV light of wavelength comprised within the photosensitivity range of the cured resin. The light-cured resin is heated by a heater. Due to the characteristics of the light-cured resin, its viscosity decreases while the temperature is increased which improves its flowability. After a printed material is cured the layer is separated from the bottom surface of the resin box.

Another Chinese utility model application CN207172756 (U) discloses a UV curing 3D printer comprising a frame, a printing platform, a lifting device, a photosensitive resin tank, a liquid crystal display (LCD), a UV light source, and a control system. The lifting device is arranged on the frame and is connected to the printing platform to move it incrementally. The photosensitive resin tank is arranged below the printing platform, and the LCD is arranged on the photosensitive resin. At the bottom of the slot, the UV light source is arranged under the LCD. The lifting device, LCD and UV light source are electrically connected to the control system.

Still another Chinese utility model application CN208343459 (U) discloses a 3D printer including a frame, a vertical (Z-axis) motion module, a platform, a resin tank, an LCD black&white screen, and a UV (405 nm) light source arranged on the frame in this order from top to bottom. The bottom surface of the resin tank is transparent.

In the known 3D printers a periodic process printing is applied: after a new layer is UV-irradiated and cured, it is necessary to detach the printed object from the glass surface and to move the whole platform along the Z axis to allow the resin flow into the place of printing. During this operation printing is paused. This idle movement of the platform extends duration of the entire printing process and increases already high risk of failure, especially in case of printing an object having a large cross-sectional area. Although some devices are equipped with a system facilitating detachment of the printout from the tub bottom surface, the use of such a system additionally extends the process.

A technical problem solved by the proposed invention is in avoiding the idle runs in the process of the SLA printing and also in making unnecessary the forced detachment of the printout from the resin tank bottom.

The claimed invention is shown on the drawings in its preferred embodiment, where:

Fig. 1 shows a schematic side view of the printer;

Figs. 2A, 2B and 2C show various positions of the printing platform where the object is printed, and partial cross-sections of the platform;

Fig. 3 is a more detailed side view on a suspension of the printing platform in a printing head;

Fig. 4 illustrates the subsystem responsible for the resin supply to the resin tub;

Fig. 5 indicates seven degrees of freedom associated with particular axes of rotation or translation of various parts within the printer;

Fig. 6 shows various examples of paths of the light spot on the window of the resin tub;

Fig. 7 illustrates a real embodiment of the printer with cross sections of selected components and four supplementary degrees of freedom;

Figs. 8A and 8B are the freeze-frames of the printing process executed by the invented printer; and

Fig. 9 shows the freeze-frames of the platform's shaft positions in four subsequent phases of the printing cycle.

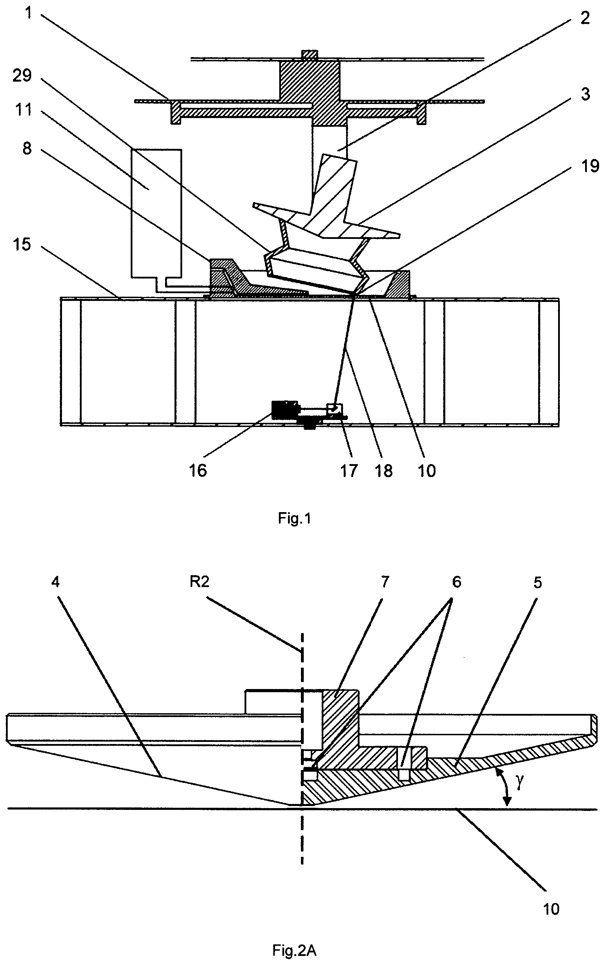

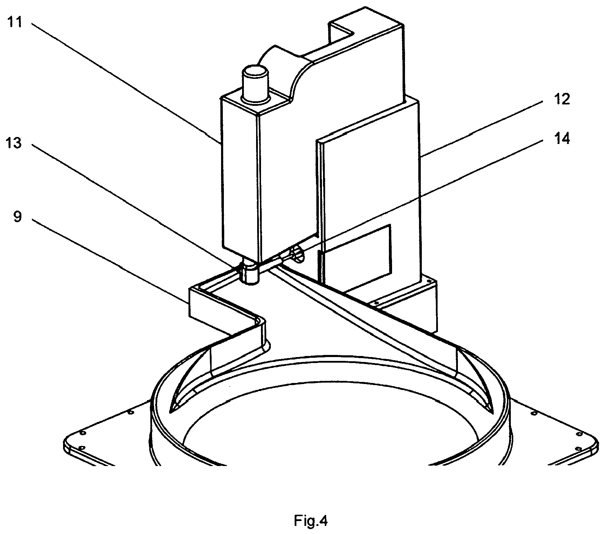

In the proposed invention printing is carried out in a continuous mode, using a multi-axis drive-positioning system, without the need to interrupt the exposure to the laser beam after the end of applying a new print layer. The 3D printer is of the bottom-up type (Fig. 1) and comprises (from top downwards): a platform where an object is printed, a platform head where the platform is mounted, a platform head suspension mechanism, a resin tub mounted on a support and fed from a resin tank through a dispenser (Fig. 4), an optical system with a laser/laser diode and a set of mirrors, and a control system, all closed in a rigid housing equipped with glazed door, feet, and optionally wheels. The control system is responsible for execution of the process of printing according to the input parameters provided to specialized embedded software. The control system may be equipped with appropriate input and output devices, eg. various ports (e.g. serial, USB, micro-USB), a keyboard and a screen or a touch screen, also a card memory socket, CD-RW/DVD, remote communication modules (Bluetooth included) and other subsystems usually applied in sophisticated devices.

For special purposes, e.g. a remote control, the housing may include a camera, a laser measuring system, various sensors and gauges, etc.

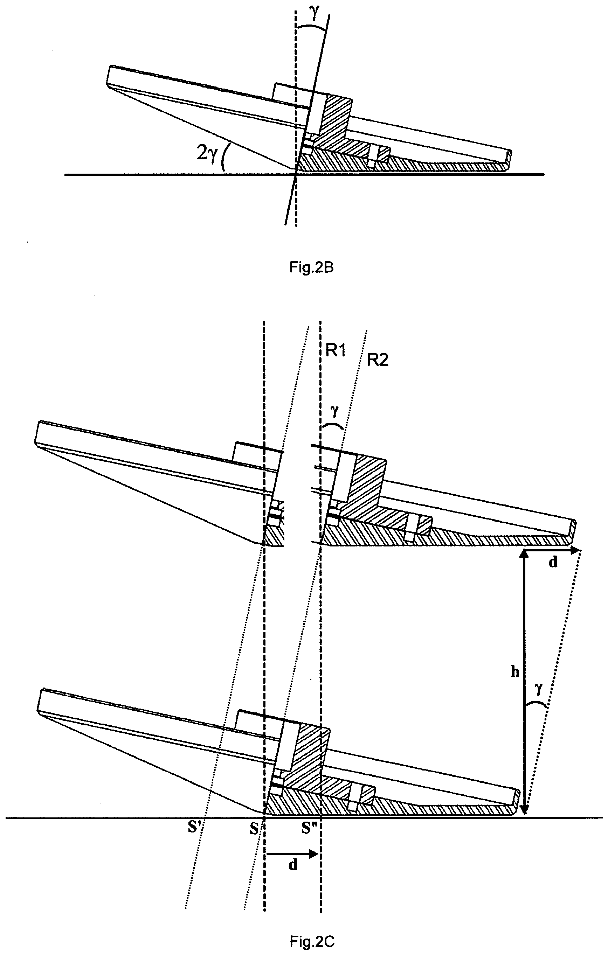

Continuous printing is provided by a continuous movement of the platform relative to the bottom of the resin tub. The platform itself is a part of a platform head suspended in the suspension mechanism. The platform in its working part has a conical shape. In a rest position when the cone axis is vertical, the cone generatrix makes an angle $\gamma$ with horizontal plane of the window of the resin tub (Fig. 2A). In the working position the cone axis is inclined from the vertical by the same angle $\gamma$ (Fig. 2B) at which a cone generatrix is parallel to the bottom of the tub, i.e. to the glass window. This ensures nearly linear contact of the print site with the window surface. The opposite generatrix of the cone creates then a twice as large angle 2y (Fig. 2B) with the tub bottom.

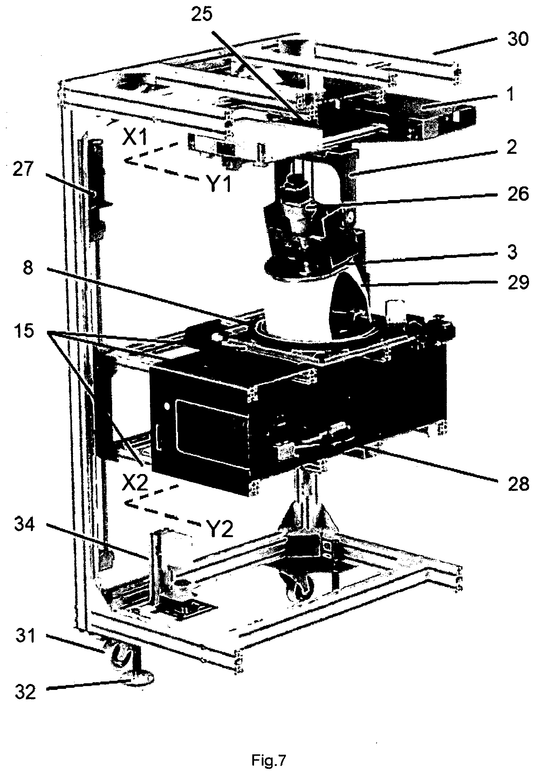

The value of angle $\gamma$ depends on specific conditions selected for the printing process. It may differ according to the kind of the resin, geometry of the printed object, etc. In an embodiment presented in more detail below and on the photographs Fig. 7-9, angle y equalled to 12 degrees.

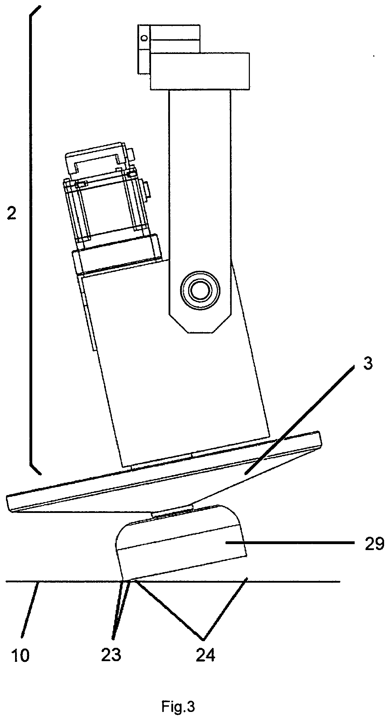

The platform can be monolithic (Fig. 3), or it may have an exchangeable conically shaped cap (Figs. 2A-2C). Removable cap enables easy adjustment of the platform, angle $\gamma$ included, to specific needs. It also helps in detachment of the printout from the platform which can be done outside the printing chamber. Besides, before detachment of the printout from the cap it still may be used as a support for the printout during auxiliary operations like washing, etching, smoothing, polishing, painting, drying, etc. In the meantime next object can be printed on another cap. The cap can be screwed to its support or fastened with a latch or a quick coupler.

The printer has seven degrees of freedom, related to seven axes responsible for moving each of the printer systems. Four degrees of freedom are these of the suspension mechanism, one is related to the resin tub, and the remaining two degrees of freedom - to an opto-mechanical system directing the light beam to the resin tub window. By using drives equipped with encoders, it is possible to constantly control each axis of the printer.

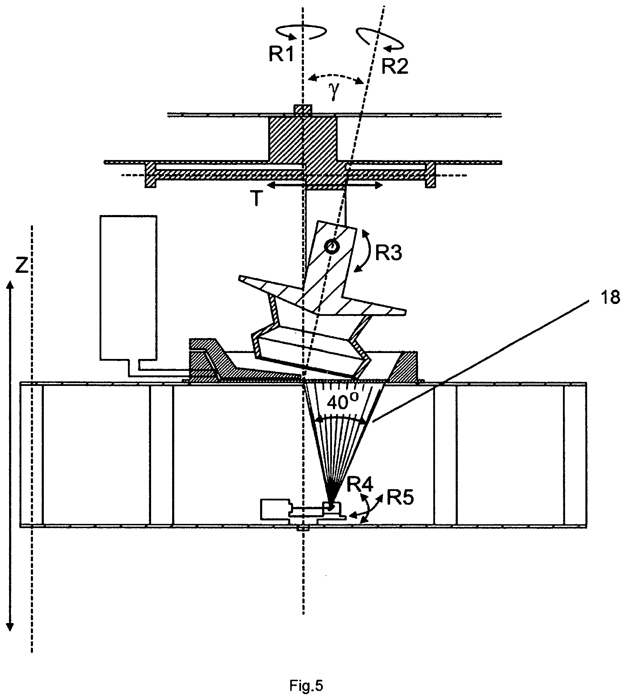

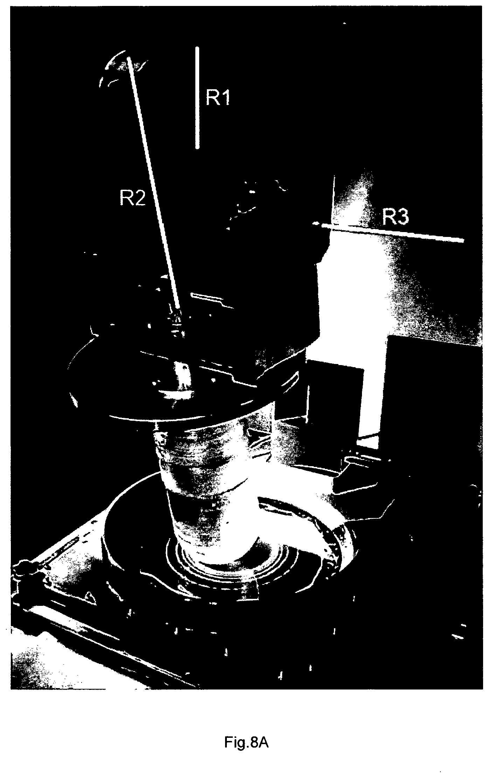

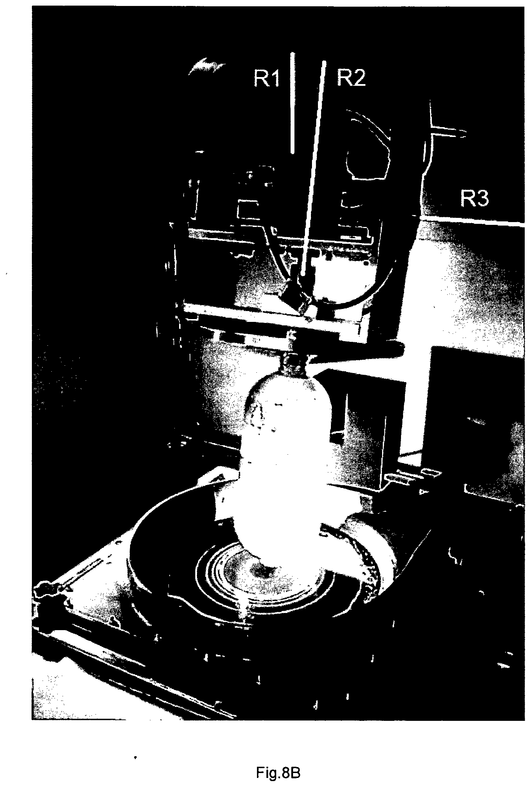

The platform head can rotate about a vertical axis R1 as shown in Fig. 5. Selection of angular velocity $\omega$ of the printing head depends mainly on viscosity of the resin and the pre-set printing speed (conversion of the linear speed of exposure to the angular velocity), thus it depends on the width of the path and the diameter on which it is irradiated. In most applications the angular velocity $\omega$ may vary between 1 to 30 revolutions per minute (RPM). For printing illustrated by freeze-frames in Figs. 8A and 8B the value of $\omega$ was set to 2.5 RPM. For production under usual conditions 10 RPM may be recommended.

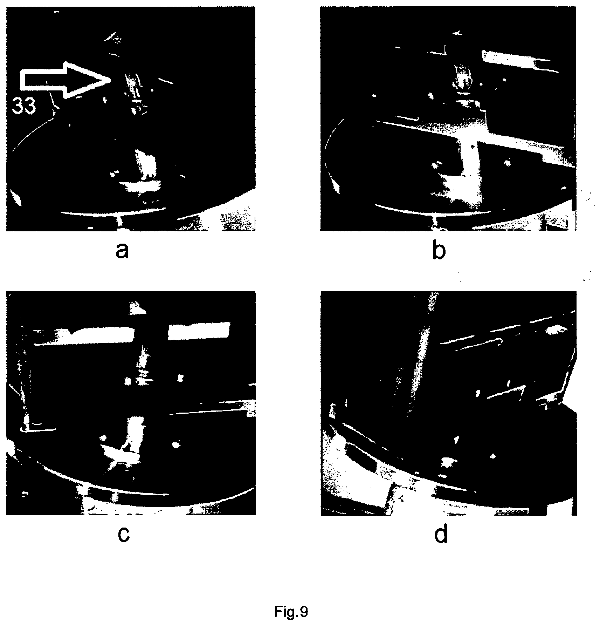

The platform suspended within the platform head rotates about an axis R2 which is inclined to the axis R1 at the same angle $\gamma$ (cf. Figs. 2A-2C and 5). The platform rotates with the same angular speed but in opposite direction ($-\omega$) which is symbolically marked in Fig. 5. Combination of these two rotations results in that the cone is rolling with a skid over the window's surface. This is illustrated by four freeze-frames (a-d) in Fig. 9. The markers on the platform shaft (indicated with a white arrow in picture "a") maintain their orientation with respect to the camera. Rolling with skidding of the printed object on the window's surface enables its continuous detachment from the window, and printing within stabilized layer of the fresh resin. Besides, this allows any point of the conical platform to be irradiated at any point on the resin tub. In the case of objects without an axis of symmetry, the printer uses idle motion to irradiate subsequent layers in the appropriate place.

Vertical displacement either of the platform head suspension mechanism, or of the resin tub support which is necessary to compensate the build-up of the printout is made along vertical axis Z. In an embodiment illustrated in Figs. 7-9 a variant of vertically movable support of the resin tub was selected. Speed v of vertical displacement (downwards in the here discussed embodiment) can be easily calculated taken the thickness s of printed layer and the rotational speed $\omega$:

$$v = s * \omega$$

For example, if the layer thickness equals 0,1 mm and the speed of rotation is set to 10 RPM, then the resin tub must descend by 1 mm per minute.

The thickness s of the layer is controlled by a software and can be changed in the range approximately from 0.01 mm to 1 mm, also during printing. The speed v must be adjusted accordingly.

The conical platform rotates about its axis R2 with an angular velocity ω low enough for the resin to harden within the light spot, and large enough that the printed object does not stick to the bottom of the tub. Simultaneously, the continuous rotation of the conical platform against the rotation of the platform head forces the liquid resin to flow into the printing area, which enables the use of resins with a higher density and viscosity for printing. As a result, the printing process is speeded up and the detachment of the printout from the work surface is more reliable, regardless of size of the produced object. Thanks to the reduction of stresses in the printed object, the print quality is also improved.

Because of inclination (angle y) of the axis R2 of the conical platform, the printout would be distorted. For example, printing of a cylindrical tube (according to a virtual model uploaded to the printer controller) would result in a printout shaped as a conical tube having a divergence equal to 2y. This is because the point of intersection of the platform axis and the window plane moves outwards (point S' in Fig. 2C) when the platform is elevated or the resin tub is lowered.

Therefore the radial coordinate of the platform in relation to the tub center has to be steadily corrected either by a horizontal movement of the platform head, or by movement of the resin tub in opposite direction, so that the point of intersection of the platform axis R2 with the tub bottom is not changed (point S in Fig. 2C). Intersection of vertical axis R1 of the platform head with the window plane moves to point S" (Fig. 2C) then. Obviously, because of the platform head rotation about axis R1 point S" draws a circle (more exactly: a tight spiral) on the window surface. In the printing device illustrated in Fig. 5 radial displacement along the axis T of the head platform rotating about the axis R1 has been implemented. The axis T rotates together with the platform head.

The printer head vertical elevation h and its horizontal displacement d satisfy the proportionality equation:

$$d = \tan \gamma * h$$

Tangent of angle γ is a coefficient of proportionality. Given the angle γ value, horizontal displacement d can be easily controlled by applying a linear function of increase h of the head elevation.

The printer has also at least one opto-mechanical degree of freedom related to micromovements of the mirror or a set of mirrors directing the light beam toward the printing space between the platform and the tub bottom. In the basic embodiment the mirror makes angular oscillations about a horizontal axis R4 perpendicular to the plane of propagation of the light beam. If shown in Fig. 5, the axis R4 would be perpendicular to the plane of the drawing.

Extremely fast oscillations of the mirror are executed by a laser galvanometer. The value of angular tilt of the mirror depends on the specific needs and for example may be equal to ±20 degrees (angular span of 40 degrees shown in Fig. 5). The mirror can reach up to several thousand positions per second, which allows for almost linear instead of point-like exposure with a laser spot.

In more sophisticated embodiment the mirror oscillates also about another axis R5 which is perpendicular to the axis R4. In one variant the axis R5 is horizontal along the direction of the laser beam before its reflection from the mirror, and in another variant the axis R5 is vertical. In both cases the axis R5 lies in the plane of the drawing in Fig 5, but it is not shown for the sake of clarity of the drawing.

However, in a strongly recommended embodiment, second movement of the mirror is not accomplished by oscillation about the axis R5, but by rotation of a disc supporting the mirror about its vertical axis R5.

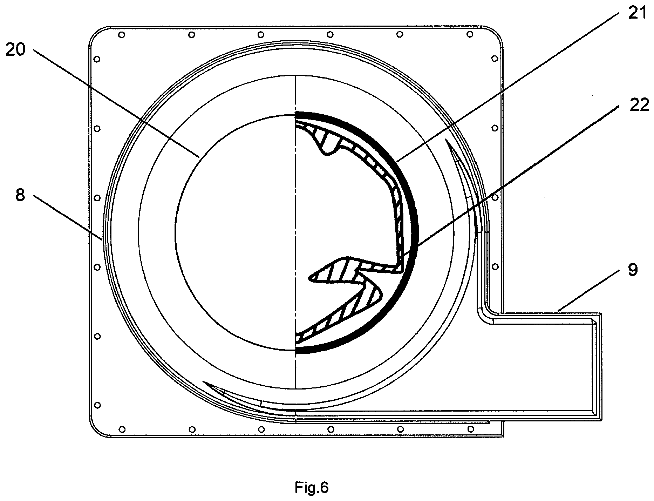

Combination of two rotations of the mirror about two axes R4 and R5 allows for directing the light beam toward any point on the surface of the resin tub mirror. Fig. 6 shows on the left half the light spot trace on the window with the mirror rotation about the axis R5 only (narrow semi-circular path), and on the right half the result of combination of both rotations of the mirror, i.e. about both axes R4 and R5 (wide semi-circular path). Combined movement allows for increasing the printing surface. It also makes possible controlling the shape of the printout. An example is illustrated in Fig. 6 - printing of an object having variable thickness of the wall (dashed area in the right half of the window).

Under usual conditions the light spot on the window's upper surface is circular with a diameter of about 0.2 mm. Both the light spot shape and diameter can be changed by a suitable optical system, e.g. a spherical (circle) or aspherical (ellipse) diverging lens mounted before or behind the mirror.

The top surface of the quartz glass window which makes a bottom of the resin tub is covered by a layer of polydimethylsiloxane (PDMS), strongly hydrophobic and UV-VIS transparent (cca 230-700 nm) silicone polymer.

Additionally but not necessarily, the invented 3D printer may be equipped with a set of actuators allowing for a displacement of the whole suspension mechanism in a horizontal plane X1-Y1 (Fig. 7). This may be useful for accurate positioning in relation to the resin tub, especially in case of printing complicated objects when the span of radial displacements along axis T is not sufficient. This may be also helpful to carry out the maintenance operations. Alternatively or supplementally the support of the resin tub may also be equipped with the actuators adjusting its position in a horizontal plane X2-Y2 (Fig. 7). All together the invented printer may have as much as eleven degrees of freedom.

The device is equipped with a number of systems that allow for maintenance-free performance of the process. These are e.g. a system of the resin mixing in the tank and sensors for measuring the amount of liquid resin in the tub.

A system of heaters and fans ensures an appropriate temperature inside the working chamber and a temperature of the liquid itself. Proper selection and placement of these components allows to achieve a temperature of up to 50 °C, which is required for printing using certain types of resin. The possibility of automatic dispensing of the material into the resin tub results in an almost maintenance-free printing process. For example, use of a peristaltic pump for the resin dispensing from the container means that it is not necessary to clean the printer every time the material is changed.

The resin tub is equipped with a resin mixing system that continuously rubs the bottom of the tub and mixes the resin. The whole device is integrated with a driver which communicates with the printer's components and enables dynamic control of each axis and all printing parameters.

The invented 3D printer is particularly suited for printing of relatively large axisymmetric objects having e.g. a diameter of more than 200 mm, and over 500 mm height. The printer is equipped with the sets of wheels and additional feet in the form of vibro-isolators, which ensure stability of the device, insulation against transmission of vibrations and proper levelling.

The material consumption in the invented process does not differ from the consumption when printing with standard SLA printers, which use a specific orientation of the print on supports in order to reduce the print surface to facilitate tearing off. In the presented system, the supports are used only to level the curvature of the conical platform and to support the printout, which is formed at too large an angle, e.g. 60 degrees.

According to basic embodiment of the invention the 3D printer comprises the resin tub 8, the optical system 28, the platform 3 supporting the printed object 29, and various actuators controlled by a control system, all mounted on a frame 30 enclosed in a housing. The frame 30 or the housing has wheels 31 for transportation, and also has feet 32 for stable on-site setting of the printer. The feet 32 comprise vibro-isolators. It is also equipped with a leveling mechanism 34.

If the word "actuator" is used in this description one should understand this means any kind of a device that causes respective part of the printer to operate, e.g. a motor, servo, encoder, absolute encoder, etc.

The platform 3 is suspended in the platform head 2 which in turn is mounted in a suspension mechanism 1 fixed to the frame. The platform head 2 is rotatable about vertical axis R1.

The platform 3 is rotatable about inclined axis R2 forming an angle γ with vertical. Besides, the platform 3 has a conical surface 4 where the object is printed. The cone axis is collinear with the axis of rotation R2 of the platform 3. A generatrix of the cone makes the same angle γ with the plane perpendicular to the cone axis. The more inclined to vertical the axis R2 is, or the bigger is the angle formed by the axes R1 and R2, the greater the slope of the cone.

The platform head 2 has the means 25 making it rotatable with a variable angular velocity ω1. Also the platform 3 has the means 26 making it counter-rotatable with a variable negative angular velocity -ω2. Both angular velocities ω1 and -ω2 may have the same absolute value |ω|. The platform's shaft has the markers 33 for visual controlling a relation between angular velocities ω1 and -ω2.

It is recommended that the absolute values of angular velocities ω1 and ω2 are comprised in a range of 1-30 RPM, and preferably they are set between 10-15 RPM. Usually, the angular velocities ω1 and ω2 are constant during printing, but depending on specificity of the printed object these angular velocities may be changed on the fly.

The bottom of the resin tub 8 has a quartz glass window 10 covered with a silicone layer of PDMS.

The suspension mechanism 1 has the means for radial displacement of the platform head 2 and of its vertical axis R1, relative to the point of intersection S of the inclined axis R2 with the upper surface of the window 10. If not programmed otherwise, this point of intersection S remains fixed during printing.

The angle γ of inclination of the axis of rotation R2 of the platform 3 is controllable by rotation of the platform 3 about a horizontal axis R3 in the platform head 2.

In the described embodiment of the invention the platform 3 has a removable conical cap 5 fixed with the fastening means 6 to a support of the cap 7.

The optical system 28 comprises a laser or a laser diode emitting a light beam 18 reflected by a mirror or a set of mirrors 17 toward the window 10 where it makes a light spot 19 for curing the resin in the resin tub 8. The wavelength used is 405 nm.

An instantaneous position of the light spot 19 on the upper surface of the window 10 is controlled by a control system, and it is executed by rotation of the mirror 17 about horizontal axis R4, and also about vertical axis R5.

Rotation of the mirror 10 only about vertical axis R5 results in a narrow circular path 20 of the light spot 19 on the window's 10 surface. When oscillations of the mirror 17 about horizontal axis R4 are switched on, a wide circular path 21 of the light spot 19 on the window's 10 surface is obtained. Additional switching on-off the light source 16 makes possible to irradiate and cure liquid resin on an area 23 of any shape.

According to the invented method of 3D printing, the above described 3D printer has the platform head 2 mounted in the suspension mechanism 1, and the platform head 2 rotates about vertical axis R1, and the platform 3 suspended in the platform head 2 rotates about inclined axis R2 forming the angle γ with vertical. A generatrix of the conical surface 4 of the bottom of the platform 3 makes the same angle γ with the plane perpendicular to the cone axis. The printout 29 is printed on the conical surface of the platform, and the printing process is executed in a resin tub 8 by curing the resin illuminated from beneath through a quartz glass window 10 by a light beam 18 emitted and directed within an optical system 28 comprising a laser or laser diode 16 and a mirror 17.

If required, the angle γ of inclination to vertical of the inclined axis R2 of the platform 3 is adjusted during printing by rotation of the platform 3 about horizontal axis R3 assigned to the platform's 3 suspension in the platform head 2.

The position of the light spot 19 on the upper surface of the window 10 is controlled by a control system, through rotation of the mirror 17 about horizontal axis R4 and also about vertical axis (R5).

During printing the resin tub 8 is fed with resin from an exchangeable resin container 11 placed in a socket 12. The amount of resin supplied to a spout 9 of the resin tub 8 is set in a resin dispenser 13 by appropriate regulation 14. The spout 9 helps in even distribution of resin on the bottom of the resin tub 8, i.e. on the upper surface of the window 10.

The resin tub 8 is placed on a rigid support 15 which is movable in vertical direction Z with use of an actuator 27.

The object is printed in a narrow zone 23 of irradiation and light-curing of liquid resin. Due to rotation of the platform head 2 and counter-rotation of the platform 3, the object is detached from the window in a much wider detachment zone 24. This zone is also used for supply and mixing of liquid resin in a relatively thin layer on the window 10.

List of references

1 - suspension mechanism
2 - platform head
3 - platform
4 - conical surface of the platform
5 - conical cap of the platform
6 - fastening means of the cap
7 - support of the cap in the platform
8 - resin tub
9 - spout for a resin supply
10 - quartz glass window of the resin tub
11 - resin container
12 - socket for the resin container
13 - resin dispenser
14 - regulation of the resin dispenser
15 - support of the resin tub
16 - laser / laser diode
17 - mirror / set of mirrors
18 - light beam
19 - light spot on the window
20 - circular narrow path of the light spot
21 - circular wide path of the light spot
22 - exemplary area irradiated with the light spot

23 - irradiation and curing zone
24 - detachment zone
25 - actuator of the platform head rotation
26 - actuator of the platform rotation
27 - actuator of vertical displacement of the tub support
28 - optical system
29 - printout
30 - frame of the printer
31 - frame wheel
32 - frame foot
33 - marker
34 - levelling mechanism

**Claims**

1. A 3D printer comprising a resin tub, an optical system, a platform supporting the printed object, and the actuators controlled by a control system, all mounted on a frame or chassis enclosed in a housing, **characterized in that** the platform (3) is suspended in a platform head (2) mounted in a suspension mechanism (1), and **in that** the platform head (2) is rotatable about vertical axis (R1), and the platform (3) is rotatable about inclined axis (R2) forming an angle (γ) with vertical, and wherein the platform (3) has a conical surface (4), and the cone axis is collinear with the axis of rotation (R2) of the platform (3), and a generatrix of the cone makes the same angle (γ) with the plane perpendicular to the cone axis.

2. The 3D printer according to claim 1, **characterized in that** the platform head (2) has the means (25) making it rotatable with a variable angular velocity (ω1) while the platform (3) has the means (26) making it counter-rotatable with a variable negative angular velocity (-ω2).

3. The 3D printer according to claim 2, **characterized in that** the angular velocity (ω1) of the platform head (2) and the negative angular velocity (-ω2) of the platform (3) have the same absolute value |ω|.

4. The 3D printer according to claim 2 or 3, **characterized in that** the absolute values of angular velocities (ω1, ω2) are comprised in a range of 1-30 RPM, and preferably they are set between 10-15 RPM.

5. The 3D printer according to any of claims 2-4, **characterized in that** the angular velocities (ω1, ω2) are constant during printing.

6. The 3D printer according to any of preceding claims, **characterized in that** the bottom of the resin tub (8) has a quartz glass window (10), preferably covered with a silicone layer.

**7.** The 3D printer according to claim 6, **characterized in that** the suspension mechanism (1) has the means for radial displacement of the platform head (2) and its vertical axis (R1), relative to the point of intersection (S) of the inclined axis (R2) with the upper surface of the window (10), and preferably **in that** this point of intersection (S) remains fixed during printing.

**8.** The 3D printer according to any of preceding claims, **characterized in that** the angle (γ) of inclination of the axis of rotation (R2) of the platform (3) is controllable by rotation of the platform (3) about a horizontal axis (R3) in the platform head (2).

**9.** The 3D printer according to any of preceding claims, **characterized in that** the platform (3) has a removable conical cap (5) fixed with the fastening means (6) to a support ,of the cap (7).

**10.** The 3D printer according to any of preceding claims, **characterized in that** the optical system (28) comprises a laser or a laser diode emitting a light beam (18) reflected by a mirror or a set of mirrors (17) toward the window (10) where it makes a light spot (19) for curing the resin in the resin tub (8).

**11.** The 3D printer according to claim 10, **characterized in that** the position of the light spot (19) on the upper surface of the window (10) is controlled by a control system, through rotation or oscillation of the mirror or a set of mirrors (17) about horizontal axis (R4), and preferably also rotation or oscillation about vertical axis (R5).

**12.** A platform for a bottom-up 3D printer, **characterized in that** the platform (3) is rotatable about inclined axis (R2) forming an angle (γ) with vertical, and the platform (3) has a conical surface (4), and the cone axis is collinear with the axis of rotation (R2) of the platform (3), and wherein a generatrix of the cone makes the same angle (γ) with the plane perpendicular to the cone axis, and **in that** the platform (3) is suspended in a platform head (2) mounted in a suspension mechanism (1), and **in that** the platform head (2) is rotatable about vertical axis (R1).

**13.** The platform according to claim 12, **characterized in that** the platform (3) has a removable conical cap (5) fixed with the fastening means (6) to a support of the cap (7).

**14.** A method of 3D printing with use of a 3D printer as described in claims 1-11 and a platform as described in claims 12-13, **characterized in that** the 3D printer has a platform head (2) mounted in a suspension mechanism (1), and the platform head (2) rotates about vertical axis (R1), and **in that** the platform (3) suspended in the platform head (2) rotates about inclined axis (R2) forming an angle (γ) with vertical, and wherein the platform (3) has a conical surface (4), and the cone axis is collinear with the axis of rotation (R2) of the platform (3), and a generatrix of the cone makes the same angle (γ) with the plane perpendicular to the cone axis, and **in that** the printout (29) is printed on the bottom conical surface of the platform, and the printing process is executed in a resin tub (8) by curing the resin illuminated from beneath through a quartz glass window (10) by a light beam emitted and directed within an optical system (28) comprising a laser or laser diode (16) and a mirror or a set of mirrors (17).

**15.** The method according to claim 14, **characterized in that** the angle (γ) of inclination to vertical of the inclined axis (R2) of the platform (3) is adjusted during printing by rotation of the platform (3) about horizontal axis (R3) assigned to the platform's (3) suspension in the platform head (2), and **in that** the position of the light spot (19) on the upper surface of the window (10) is controlled by a control system, through oscillation of the mirror or a set of mirrors (17) about horizontal axis (R4), and preferably also rotation about vertical axis (R5).

**Amended claims in accordance with Rule 137(2) EPC.**

**1.** A platform supporting the printed object for a bottom-up 3D printer, **characterized in that** the platform (3) has a conical surface (4) and is rotatable about an inclined axis (R2) forming an angle (γ) with the vertical axis (R1), and the cone axis is collinear with the axis of rotation (R2) of the platform (3), and wherein a generatrix of the cone makes the same angle (γ) with the plane perpendicular to the cone axis, and **in that** the platform (3) is adapted to be suspended in a platform head (2) rotatable about the vertical axis (R1) and mounted in a suspension mechanism (1) of the printer.

**2.** The platform according to claim 1, **characterized In that** the platform (3) has a removable conical cap (5) fixed with a fastening means (6) to a support of the cap (7).

**3.** A 3D printer comprising a resin tub, an optical system, a platform as described in claims 1-2 supporting the printed object, and actuators controlled by a control system, all mounted on a frame or chassis enclosed in a housing, **characterized in that** it has a platform head (2) where the platform (3) is suspended, and the platform head (2) is rotatable about the vertical axis (R1) and is mounted in a suspension mechanism (1), and **in that** the platform head (2) has a first means (25) for making it rotatable with a variable angular velocity ($\omega1$).

4. The 3D printer according to claim 1, **characterized in that** the platform (3) has a second means (26) for making it counter-rotatable with a variable negative angular velocity (-$\omega2$).

5. The 3D printer according to claim 4, **characterized in that** the angular velocity ($\omega1$) of the platform head (2) and the negative angular velocity (-$\omega2$) of the platform (3) have the same absolute value |$\omega$|.

6. The 3D printer according to claim 4 or 5, **characterized in that** the absolute values of angular velocities ($\omega1$, $\omega2$) are comprised in a range of 1-30 RPM, and preferably they are set between 10-15 RPM.

7. The 3D printer according to any of claims 4 to 6 **characterized in that** the angular velocities ($\omega1$, $\omega2$) are constant during printing.

8. The 3D printer according to any of claims 3 to 7, **characterized in that** the bottom of the resin tub (8) has a quartz glass window (10), preferably covered with a silicone layer.

9. The 3D printer according to claim 8, **characterized in that** the suspension mechanism (1) has the means for radial displacement of the platform head (2) and its vertical axis (R1), relative to the point of intersection (3) of the inclined axis (R2) with the upper surface of the window (10), and preferably **in that** this point of intersection (3) remains fixed during printing.

10. The 3D printer according to any of claims 3 to 9, **characterized In that** the angle ($\gamma$) of inclination of the axis of rotation (R2) of the platform (3) is controllable by rotation of the platform (3) about a horizontal axis (R3) in the platform head (2).

11. The 3D printer according to any of claims 3 to 10, **characterized In that** the optical system (28) comprises a laser or a laser diode emitting a light beam (18) reflected by a mirror or a set of mirrors (17) toward the window (10) where it makes a light spot (19) for curing the resin in the resin tub (8).

12. The 3D printer according to claim 11, **characterized In that** the position of the light spot (19) on the upper surface of the window (10) is controlled by a control system, through rotation or oscillation of the mirror or a set of mirrors (17) about a horizontal axis (R4), and preferably also rotation or oscillation about a vertical axis (R5).

13. A method of 3D printing with use of a platform as described in claims 1-2 and a 3D printer as described in claims 3-12 **characterized In that** the printout (29) is printed on the bottom conical surface of the platform (3) along the line parallel to the cone generatrix and a quartz glass window (10) of a resin tub (8), and the printing process is executed in the resin tub (8) by curing the resin illuminated from beneath through the quartz glass window (10) by a light beam emitted and directed within an optical system (28) comprising a laser or laser diode (16) and a mirror or a set of mirrors (17).

14. The method according to claim 13, **characterized In that** the angle ($\gamma$) of inclination of the inclined axis (R2) of the platform (3) to the vertical axis (R1) is adjusted during printing by rotation of the platform (3) about the horizontal axis (R3) assigned to the platform's (3) suspension in the platform head (2), and **in that** the position of the light spot (19) on the upper surface of the window (10) is controlled by a control system, through oscillation of the mirror or a set of mirrors (17) about the horizontal axis (R4), and preferably also rotation about the vertical axis (R5).

Fig.1

Fig.2A

Fig.2B

Fig.2C

Fig.3

Fig.4

Fig.5

Fig.6

Fig.7

Fig.8A

Fig.8B

a

b

c

d

Fig.9

Europäisches
Patentamt

European
Patent Office

Office européen
des brevets

## EUROPEAN SEARCH REPORT

Application Number

EP 21 46 0044

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/102531 A1 (EL-SIBLANI ALI [US] ET AL) 16 April 2015 (2015-04-16) * paragraphs [0004], [0045], [0046]; figures 2, 6 * | 1-15 | INV. B29C64/129 B29C64/241 B29C64/245 B33Y10/00 B33Y30/00 B29C64/135 |
| A | JP 2021 094753 A (CANON KK) 24 June 2021 (2021-06-24) * paragraph [0058]; figure 6 * | 1 | |
| A | US 2020/079007 A1 (CHENG PO-WEI [TW]) 12 March 2020 (2020-03-12) * paragraphs [0036], [0038]; figure 5c * | 1 | |

TECHNICAL FIELDS
SEARCHED       (IPC)

B29C
B33Y

The present search report has been drawn up for all claims

| Place of search | Date of completion of the search | Examiner |
|---|---|---|
| The Hague | 8 July 2022 | Nicolas, Pascal |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 46 0044

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2022

| Patent document cited in search report | | Publication date | Patent family member(s) | | Publication date |
|---|---|---|---|---|---|
| US 2015102531 | A1 | 16-04-2015 | US 2015102531 A1 | | 16-04-2015 |
| | | | US 2017246804 A1 | | 31-08-2017 |
| | | | WO 2015054340 A2 | | 16-04-2015 |
| JP 2021094753 | A | 24-06-2021 | NONE | | |
| US 2020079007 | A1 | 12-03-2020 | CN 110893683 A | | 20-03-2020 |
| | | | EP 3623155 A1 | | 18-03-2020 |
| | | | JP 2020040379 A | | 19-03-2020 |
| | | | US 2020079007 A1 | | 12-03-2020 |

EPO FORM P0459

For more details about this annex : see Official Journal of the European Patent Office, No. 12/82

**EP 4 197 743 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105856573 A
- KR 102148822 B1
- CN 208867574 U
- CN 207172756 U
- CN 208343459 U